# EUROPÄISCHE PATENTSCHRIFT

(11) **EP 1 492 957 B1**
(45) Veröffentlichungstag und Bekanntmachung des Hinweises auf die Patenterteilung: **07.11.2007**
(21) Anmeldenummer: 03724941.4
(22) Anmeldetag: 01.04.2003
(51) Int. Cl.: F04D 27/02

(54) **VAKUUMPUMPE**
VACUUM PUMP
POMPE A VIDE

(30) Priorität: 11.04.2002 DE 10215896
(43) Veröffentlichungstag der Anmeldung: 05.01.2005
(73) Patentinhaber: Oerlikon Leybold Vacuum GmbH, 50968 Köln (DE)
(72) Erfinder: KIEFFER, Manfred, 50389 Wesseling (DE); HARIG, Christian, 51105 Köln (DE)
(74) Vertreter: von Kreisler Selting Werner
(86) Internationale Anmeldenummer: PCT/EP2003/003374
(87) Internationale Veröffentlichungsnummer: WO 2003/085268

(56) Entgegenhaltungen:
- EP-A- 0 836 009
- EP-A- 0 967 394
- US-A1- 2002 067 148
- US-B1- 6 184 640
- US-B1- 6 333 614

## Beschreibung

Die Erfindung betrifft eine Vakuumpumpe mit einer eine Turbo-Molekularpumpe enthaltenden Pumpeneinheit und einem einen Wechselrichter enthaltenden Steuergerät, welches den Motorstrom für die Pumpeneinheit liefert.

Turbo-Molekularpumpen, wie sie beispielsweise in US 6,184,640 B1 oder in EP 0 836 009 B1 beschrieben sind, bestehen aus einer Pumpeneinheit und einem daran angeschlossenen Steuergerät. Die zur Pumpeneinheit gehörende Turbo-Molekularpumpe hat eine hohe Betriebsdrehzahl von über 10.000 U/min. Der Rotor dieser Pumpe hat also im Betrieb eine sehr hohe kinetische Energie. Im Fehlerfall, insbesondere bei einem Rotor-Stator-Kontakt, werden Teile des Rotors nach außen geschleudert. Dies kann zum Bersten des Gehäuses der Turbo-Molekularpumpe führen und ein Lösen der gesamten Pumpe von der Befestigung zur Folge haben. Bei größeren Turbo-Molekularpumpen mit entsprechend großem Rotor-Trägheitsmoment ist es praktisch unmöglich, alle denkbaren Gefahrenmomente durch entsprechend stark ausgelegte Gehäusekomponenten auszuschließen.

Eine wesentliche Gefahrenquelle bildet ein Versagen oder eine Fehlfunktion des Wechselrichters, der die Betriebsströme für den Pumpenmotor erzeugt. Der Pumpenmotor ist in der Regel ein bürstenloser Gleichstrommotor, dessen Rotor mit Permanentmagneten ausgestattet ist. Der Stator enthält Wicklungen, in denen ein um die Achse rotierendes Magnetfeld erzeugt wird. Ein fehlerhafter Wechselrichter kann dazu führen, dass die Pumpe mit einer zu hohen Drehzahl betrieben wird.

Der Erfindung liegt die Aufgabe zugrunde, eine aus einer Pumpeneinheit und einem Steuergerät bestehende Vakuumpumpe zu schaffen, bei der eine zuverlässige redundante Drehzahlüberwachung unter ständiger Prüfung der Signalwege mit geringem Aufwand erfolgt.

Die Lösung dieser Aufgabe erfolgt erfindungsgemäß mit den im Patentanspruch 1 angegebenen Merkmalen. Hiernach enthält die Pumpeneinheit einen Überwachungs-Mikrocontroller, dem die Signale des Drehzahlsensors der Pumpeneinheit zugeführt werden und der im Falle des Überschreitens einer vorgespeicherten maximalen Drehzahl den Wechselrichter abschaltet. Außerdem ist vorgesehen, dass der im Steuergerät enthaltene Steuer-Mikrocontroller und der in der Pumpeneinheit vorgesehene Überwachungs-Mikrocontroller zum Datenabgleich miteinander kommunizieren.

Dadurch, dass der Überwachungs-Mikrocontroller in der Pumpeneinheit angeordnet ist, kann er zwei unterschiedliche Funktionen erfüllen, nämlich einerseits die Speicherung der Pumpenparameter, zu denen unter anderem die höchstzulässige Pumpendrehzahl gehört, und zum anderen die Überwachungs- und Abschaltaufgabe. Der Überwachungs-Mikrocontroller führt mit dem Steuer-Mikrocontroller einen Dialog zum Datenabgleich. Dadurch werden zugleich die Datenwege überprüft. Das Signal des Drehzahlsensors, das die aktuelle Pumpendrehzahl repräsentiert, wird beiden Mikrocontrollern zugeführt, so dass in beiden Mikrocontrollern jeweils unabhängig beurteilt wird, ob die Pumpendrehzahl im zulässigen Bereich liegt. Sofern die maximale Pumpendrehzahl von der Betriebstemperatur der Pumpe abhängig ist, kann außerdem das Signal eines Temperatursensors an die Mikrocontroller geliefert werden.

Wenn der Steuer-Mikrocontroller versagt und daher die Pumpendrehzahl über den zulässigen Wert ansteigt, wird dies von dem Überwachungs-Mikrocontroller erkannt und dieser bewirkt über einen eigenen Kanal die sofortige Abschaltung des Wechselrichters.

Wenn bei der Kommunikation der beiden Mikrocomputer während des Datenabgleichs festgestellt wird, dass die zu vergleichenden Daten voneinander abweichen, folgt eine Fehlermeldung bzw. eine Beendigung des Pumpenbetriebes.

Dadurch, dass der Überwachungs-Mikrocontroller in der Pumpeneinheit angeordnet ist und außer der Überwachungsfunktion auch die Funktion der Speicherung der Pumpendaten und ihre Übertragung an den Steuer-Mikrocontroller wahrnimmt, hat der Überwachungs-Mikrocontroller eine Doppelfunktion. Üblicherweise werden für die drei Funktionen Steuerung, Überwachung und Speicherung drei Mikrocontroller eingesetzt. Demgegenüber sind bei der erfindungsgemäßen Vakuumpumpe für die genannten drei Funktionen nur zwei Mikrocontroller erforderlich.

Ein Mikrocontroller im Sinne der vorliegenden Erfindung ist ein Mikroprozessor mit den zugehörigen Speichern und anderen Hilfskomponenten, also ein kompletter Computer, der imstande ist, eine Speicherung und Verarbeitung von Daten selbständig vorzunehmen und einen Dialog mit anderen Rechnern zu führen.

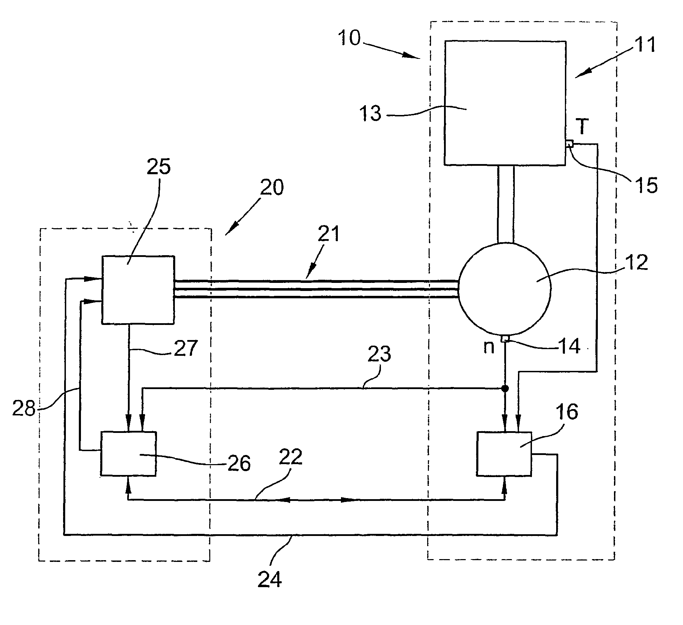

Im Folgenden wird unter Bezugnahme auf die einzige Figur der Zeichnung ein Ausführungsbeispiel der Erfindung näher erläutert.

In der Zeichnung ist ein schematisches Blockschaltbild der Vakuumpumpe dargestellt.

Die Vakuumpumpe weist eine Pumpeneinheit 10 auf, die eine Turbo-Molekularpumpe 11 enthält. Die Turbo-Molekularpumpe 11 besteht aus einem Motor 12, der hier als bürstenloser Gleichstrommotor ausgebildet ist, und einem Pumpenteil 13. Der Motor 12 treibt den Pumpenteil 13 direkt an, also ohne Zwischenschaltung eines Übersetzungsgetriebes. Der Motor 12 ist ein schnelllaufender Motor mit Drehzahlen über 10.000 U/min.

Ein Drehzahlsensor 14 ermittelt die Drehzahl des Motors 12 bzw. die Drehzahl des Rotors des Pumpenteils 13. Der Drehzahlsensor 14 ist beispielsweise eine Spule, die auf einen mit der Welle rotierenden Magneten anspricht und bei jedem Durchlauf des Magneten einen Impuls erzeugt. Ferner ist ein Temperatursensor 15 vorgesehen, der die Temperatur T des Pumpenteils 13 misst.

Die Pumpeneinheit 10 enthält ferner einen Überwachungs-Mikrocontroller 16. Dieser empfängt die Signale des Drehzahlsensors 14 und des Temperatursensors 15. Er enthält einen Speicher, in dem Kenndaten der Turbo-Molekularpumpe 11 gespeichert sind, wie die höchstzulässige Drehzahl, das Herstellungsdatum, die Maschinennummer und ähnliches. Außerdem werden in dem Speicher Ereignisse gespeichert, wie das Auftreten einer Überdrehzahl, die Wartungsdaten des Gerätes oder auch Angaben über das Steuergerät, mit welchem die Pumpeneinheit kombiniert wurde.

Der Betrieb der Pumpeneinheit wird von dem Steuergerät 20 gesteuert, das auch die Stromversorgung liefert. Das Steuergerät ist über Kabel mit der Pumpeneinheit verbunden. Das Kabel enthält eine dreiphasige Versorgungsleitung 21 sowie Daten- oder Signalleitungen 22,23.

Das Steuergerät 20 enthält einen Wechselrichter 25, der die für den Betrieb des Motors 12 erforderlichen Phasenspannungen der entsprechenden Frequenz liefert, und einen Steuer-Mikrocontroller 26. Der Steuer-Mikrocontroller 26 empfängt über eine Leitung 27 ein Signal über die aktuelle Frequenz der Motor-Betriebssignale, also ein Signal, das der Soll-Drehzahl entspricht. Über die Leitung 23 erhält der Steuer-Mikrocontroller 26 das Ist-Signal der Motordrehzahl n. Weichen diese beiden Signale voneinander ab, dann bewirkt der Steuer-Mikrocontroller 26 über eine Leitung 28 die Abschaltung des Wechselrichters 25.

Der Überwachungs-Mikrocontroller 16 kann über die Leitung 24 ebenfalls den Wechselrichter 25 ausschalten. Dies geschieht beispielsweise dann, wenn die vom Drehzahlsensor 14 gemessene Drehzahl über der maximal zulässigen Drehzahl liegt.

Auf der Leitung 22 können die Mikrocontroller 16 und 26 bidirektional untereinander kommunizieren. Beispielsweise teilt der Überwachungs-Mikrocontroller 16 dem Steuer-Mikrocontroller 26 die maximal zulässige Drehzahl der Turbo-Molekularpumpe 11 mit. Die Datenübertragung erfolgt unter Anwendung üblicher Sicherheitstechniken mit Fehlererkennung, beispielsweise nach dem CRC-Verfahren (Cyclic Redundancy Check). Dadurch wird die Datenübertragung insbesondere auf der Leitung 22 gesichert.

Der Überwachungs-Mikrocontroller 16 überwacht den Steuer-Mikrocontroller 26 und prüft außerdem, ob die Datenwege intakt sind. Wird ein Fehler festgestellt, so schaltet der Überwachungs-Mikrocontroller 16 über Leitung 27 den Wechselrichter 25 ab und bewirkt eine Alarmerzeugung. Ferner wird in gewissen Zeitabständen der Wechselrichter für kurze Zeit (einige Millisekunden) abgeschaltet und geprüft, ob und mit welcher Charakteristik der Motorstrom absinkt.

Die Überprüfung der Datenwege erfolgt in der Weise, dass das Ausbleiben von Daten auf einer der Leitungen 22,23 zu einer Abschaltung führt. Auf diese Weise werden sowohl Unterbrechungen als auch Signalverfälschungen oder abnorme Situationen sicher festgestellt.

## Patentansprüche

1. Vakuumpumpe mit einer eine Turbo-Molekularpumpe (11) enthaltenden Pumpeneinheit (10) und einem einen Wechselrichter (25) enthaltenden Steuergerät (20), welches den Motorstrom für die Pumpeneinheit liefert, wobei die Pumpeneinheit (10) einen Drehzahlsensor (14) enthält, dessen Signal einem Steuer-Mikrocontroller (26) des Steuergerätes (20) zugeführt wird, welcher im Falle einer unzulässigen Drehzahl den Wechselrichter (25) abschaltet,
**dadurch gekennzeichnet,**
**dass** die Pumpeneinheit (10) einen Überwachungs-Mikrocontroller (16) enthält, dem ebenfalls die Signale des Drehzahlsensors (14) zugeführt werden und der im Falle des Überschreitens einer vorgespeicherten maximalen Drehzahl den Wechselrichter (25) abschaltet, und dass der Steuer-Mikrocontroller (26) und der Überwachungs-Mikrocontroller (16) zum Datenabgleich miteinander kommunizieren.

2. Vakuumpumpe nach Anspruch 1, **dadurch gekennzeichnet, dass** der Überwachungs-Mikrocontroller (16) die Signale mindestens eines an der Turbo-Molekularpumpe (11) vorgesehenen Temperatursensors (15) empfängt und an den Steuer-Mikrocontroller (26) mitteilt.

3. Vakuumpumpe nach Anspruch 1 oder 2, **dadurch gekennzeichnet, dass** der Überwachungs-Mikrocontroller (16) einen Speicher zur Aufnahme von gerätebezogenen Daten der Turbo-Molekularpumpe (11) und zur Aufnahme von ereignisbezogenen Daten der Turbo-Molekularpumpe enthält.

## Claims

1. A vacuum pump comprising a pump unit (10) including a turbomolecular pump (11) and a controller apparatus (20) including a converter having controlled rectifiers (25), said controller apparatus (20) supplying the motor current for the pump unit, wherein the pump unit (10) includes a rotational speed sensor (14) whose signal is fed to a controlling microcontroller (26) of the controller apparatus (20), said controlling microcontroller switching off the converter (25) if an inadmissible rotational speed is reached,
**characterized in that**
the pump unit (10) includes a monitoring microcontroller (16) which is also supplied with the signals of the rotational speed sensor (14), and which switches off the converter (25) if a prestored maximum rotational speed is exceeded, and the controlling microcontroller (26) and the monitoring microcontroller (16) communicate with each other for data exchange.

2. The vacuum pump according to claim 1, **characterized in that** the monitoring microcontroller (16) receives the signals of at least one temperature sensor (15) provided at the turbomolecular pump (11) and communicates said signals to the controlling microcontroller (26).

3. The vacuum pump according to claim 1 or 2, **characterized in that** the monitoring microcontroller (16) includes a memory for storing device-related data of the turbomolecular pump (11) and for storing event-related data of the turbomolecular pump.

## Revendications

1. Pompe à vide avec une unité de pompe (10) comprenant une pompe turbomoléculaire (11), et un appareil de commande (20) comprenant un onduleur (25) qui fournit le courant pour l'unité de pompe, l'unité de pompe (10) comprenant un capteur de vitesse (14) dont le signal est transmis à un microcontrôleur de commande (26) de l'appareil de commande (20) qui désactive l'onduleur (25) en cas d'une vitesse de rotation inadmissible,
**caractérisée en ce que** l'unité de pompe (10) comprend un microcontrôleur de surveillance (16) qui reçoit également les signaux du capteur de vitesse (14) et désactive l'onduleur (25) en cas d'un dépassement d'une vitesse de rotation maximale préalablement mémorisée, et le microcontrôleur de commande (26) et le microcontrôleur de surveillance (16) communiquent l'un avec l'autre pour un alignement de données.

2. Pompe à vide selon la revendication 1, **caractérisée en ce que** le microcontrôleur de surveillance (16) reçoit les signaux d'au moins un capteur de température (15) prévu sur la pompe turbomoléculaire (11) et les transmet au microcontrôleur de commande (26).

3. Pompe à vide selon la revendication 1 ou 2, **caractérisée en ce que** le microcontrôleur de surveillance (16) comprend une mémoire pour stocker des données concernant le fonctionnement de la pompe turbomoléculaire (11) et pour stocker des données concernant les événements de la pompe turbomoléculaire.
